# EUROPEAN PATENT APPLICATION

(11) **EP 4 756 925 A1**
(43) Date of publication of application: **10.06.2026**
(21) Application number: 24849063.3
(22) Date of filing: 25.07.2024
(51) Int. Cl.: H01M 4/525, C01G 53/00

(54) **POSITIVE ELECTRODE ACTIVE MATERIAL FOR LITHIUM ION SECONDARY BATTERIES, METHOD FOR PRODUCING POSITIVE ELECTRODE ACTIVE MATERIAL FOR LITHIUM ION SECONDARY BATTERIES, AND LITHIUM ION SECONDARY BATTERY**

(30) Priority: 28.07.2023 JP 2023123253
(71) Applicant: SUMITOMO METAL MINING CO., LTD., Tokyo 105-8716 (JP); NATIONAL UNIVERSITY CORPORATION YOKOHAMA NATIONAL UNIVERSITY, Yokohama-shi Kanagawa 240-8501 (JP)
(72) Inventor: AIDA, Taira, Niihama-shi, Ehime 792-0002 (JP); HAYASHI, Kazuhide, Niihama-shi, Ehime 792-0002 (JP); YABUUCHI, Naoaki, Yokohama-shi, Kanagawa 240-8501 (JP)
(74) Representative: Watermeyer, Nicholas
(86) International application number: PCT/JP2024/026706
(87) International publication number: WO 2025/028409

(57) **Abstract**

A positive electrode active material for a lithium-ion secondary battery containing secondary particles in which a plurality of primary particles are aggregated with each other contains a lithium-transition metal complex oxide having a layered rock-salt type structure. In a crystal structure of the lithium-transition metal complex oxide, a percentage of an element other than Li occupying an Li site (3b site) is 2% or more and 8% or less. A composition of the lithium-transition metal complex oxide is represented by general formula (1) below:

General formula (1): Li₁₋ₓNiO_{2+α}

(where 0.02≤x≤0.08 and -0.1≤α≤0.1).

## Description

### TECHNICAL FIELD

The present invention relates to a positive electrode active material for a lithium-ion secondary battery, a production method of a positive electrode active material for a lithium-ion secondary battery, and a lithium-ion secondary battery.

### BACKGROUND ART

In recent years, with the growing popularity of portable electronic devices, such as mobile phone terminals, laptop computers, and the like, it is strongly desired to develop small and lightweight non-aqueous electrolyte secondary batteries having high energy density and durability.

A non-aqueous electrolyte secondary battery, such as a lithium-ion secondary battery or the like, is one type of secondary battery that satisfies such a requirement. A lithium-ion secondary battery using, as a positive electrode active material, a lithium metal complex oxide having a layered or spinel-type crystal structure can achieve a voltage as high as substantially 4 V, and thus is increasingly being put into practice as a battery with high energy density.

Examples of the proposed lithium metal complex oxide include, for example: lithium-cobalt complex oxide (LiCoO₂) that is relatively readily synthesized; lithium-nickel complex oxide (LiNiO₂) and lithium-nickel-cobalt-manganese complex oxide (LiNi_{1/3}Co_{1/3}Mn_{1/3}O₂) each using nickel that is more inexpensive than cobalt; and lithium-manganese complex oxide (LiMn₂O₄) and lithium-nickel-manganese complex oxide (LiNi_{0.5}Mn_{0.5}O₂) each using manganese.

In recent years, there is a need for further improvement in the performance of lithium-ion secondary batteries, and various studies have been conducted.

For example, Patent Documents 1 to 5 disclose that lithium-ion secondary batteries using lithium complex oxides controlled in terms of particle characteristics can be enhanced in cycle characteristics, i.e., a capacity maintenance rate during repeated charging and discharging.

### RELATED ART DOCUMENTS

### PATENT DOCUMENTS

Patent Document 1: Japanese Unexamined Patent Application Publication No. 2001-243949
Patent Document 2: Japanese Unexamined Patent Application Publication No. 2004-355824
Patent Document 3: Japanese Unexamined Patent Application Publication No. 2017-188444
Patent Document 4: Japanese Unexamined Patent Application Publication No. 2017-188445
Patent Document 5: International Publication No. WO2017/169129

### SUMMARY OF THE INVENTION

### PROBLEMS TO BE SOLVED BY THE INVENTION

Lithium-ion secondary batteries are increasingly used in various applications as described above, and there is a need for further improvement in their performance. Therefore, it is required to rely on a method different from conventional ones for enhancing performance of a positive electrode active material for a lithium-ion secondary battery, such as cycle characteristics and the like, when used in the lithium-ion secondary battery.

In view of the above issue in the art, in one aspect of the present invention, it is an object to provide a positive electrode active material for a lithium-ion secondary battery capable of enhancing cycle characteristics when used in the lithium-ion secondary battery.

### MEANS FOR SOLVING THE PROBLEMS

According to one aspect of the present invention for addressing the above issue, a positive electrode active material for a lithium-ion secondary battery containing secondary particles in which a plurality of primary particles are aggregated with each other is provided. The positive electrode active material contains a lithium-transition metal complex oxide having a layered rock-salt type structure. In a crystal structure of the lithium-transition metal complex oxide, a percentage of an element other than Li occupying an Li site (3b site) is 2% or more and 8% or less. A composition of the lithium-transition metal complex oxide is represented by general formula (1) below:

General formula (1): Li₁₋ₓNiO_{2+α} (where 0.02≤x≤0.08 and -0.1≤α≤0.1).

### ADVANTAGEOUS EFFECTS OF THE INVENTION

According to one aspect of the present invention, it is possible to provide a positive electrode active material for a lithium-ion secondary battery capable of enhancing cycle characteristics when used in the lithium-ion secondary battery.

### BRIEF DESCRIPTION OF THE DRAWINGS

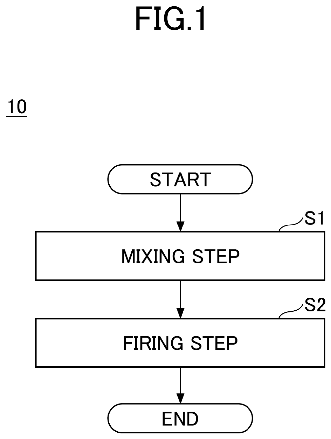

[FIG. 1] FIG. 1 is a flow of a production method of a positive electrode active material for a lithium-ion secondary battery.

### DETAILED DESCRIPTION OF THE INVENTION

Hereinafter, embodiments of the present invention will be described with reference to the drawings, but the present invention is not limited to the embodiments below. Various modifications and substitutions are possible in the following embodiments without departing from the scope of the present invention.

### [Positive Electrode Active Material for Lithium-Ion Secondary Battery]

In the following, a positive electrode active material for a lithium-ion secondary battery of the present embodiment (hereinafter referred to simply as "positive electrode active material") will be described.

### (1) Regarding Positive Electrode Active Material

The positive electrode active material of the present embodiment contains a lithium-transition metal complex oxide. The positive electrode active material of the present embodiment may consist of the lithium-transition metal complex oxide. However, in this case, the positive electrode active material containing unavoidable impurities or the like mixed in during the production process or the like is not excluded.

The lithium-transition metal complex oxide may have a layered rock-salt type structure.

### (1-1) Regarding Form of Particles

No particular limitation is imposed on the form of particles of the positive electrode active material of the present embodiment. The positive electrode active material may contain secondary particles in which a plurality of primary particles are aggregated with each other. Therefore, the positive electrode active material of the present embodiment may consist of the secondary particles, or may contain primary particles existing independently without being aggregated, in addition to the secondary particles.

The particles of the positive electrode active material of the present embodiment may contain the particles of the lithium-transition metal complex oxide, or may be formed of the particles of the lithium-transition metal complex oxide.

The form of the particles of the positive electrode active material of the present embodiment can be roughly confirmed using a scanning electron microscope (SEM) observation image (hereinafter also referred to as "SEM image") of the particles, but accuracy may be insufficient. In the positive electrode active material according to the present embodiment, preferably, the particles are processed into cross sections, and the presence or absence of the primary particles and the secondary particles is determined using their SEM image.

An exemplary preferable determination method is as follows. Specifically, the particles of the positive electrode active material are embedded in a resin, followed by processing with a cross-section polisher (CP) or the like, thereby forming a state in which the cross sections of the particles are observable. Subsequently, their SEM image is observed to determine the presence or absence of the primary particles and the secondary particles. For the determination, preferably, 50 or more particles are used for the above evaluation. No particular limitation is imposed on the upper limit of the number of particles to be evaluated. Considering the efficiency of the evaluation, it is preferable to evaluate 200 or less particles.

Also, when using a band contrast of electron backscatter diffraction (hereinafter also referred to as "EBSD") or using a focused ion beam (FIB) processing device for the processing into cross sections, the cross sections of the particles can be confirmed using an observation image of an attached scanning ion microscope (SIM).

### (1-2) Composition of Lithium-Transition Metal Complex Oxide

The lithium-transition metal complex oxide can be formed by lithium (Li), nickel (Ni), and oxygen (O). Therefore, the composition of the lithium-transition metal complex oxide is represented by general formula (1) below.

### General formula (1): Li₁₋ₓNiO_{2+α}

Preferably, x and y in the above general formula satisfy 0.02 ≤ x ≤ 0.08 and -0.1 ≤ α ≤ 0.1.

In the lithium nickelate represented by LiNiO₂, the stoichiometric ratio of the lithium element to the nickel element is 1.00. In the above general formula (1) of the lithium-transition metal complex oxide contained in the positive electrode active material of the present embodiment, the ratio by mole of the lithium element to the nickel element is represented by 1-x. In the above general formula for the lithium-transition metal complex oxide, the value x in the 1-x, representing the ratio by mole of the lithium element to the nickel element, corresponds to an amount of defects from the stoichiometric ratio of the lithium element. In the lithium-transition metal complex oxide contained in the positive electrode active material of the present embodiment, x is preferably 0.02 ≤ x ≤ 0.08. That is, in the lithium-transition metal complex oxide contained in the positive electrode active material of the present embodiment, the ratio by mole of the lithium element to the nickel element is preferably 0.98 or less, i.e., the lithium-transition metal complex oxide preferably has defects.

By setting the value x, corresponding to the amount of defects from the stoichiometric ratio of the lithium element, to be 0.02 or more and 0.08 or less to form the lithium-transition metal complex oxide having defects of the lithium element, it is possible to reduce the amount of the lithium compound adhered to the particle surfaces of the positive electrode active material of the present embodiment, i.e., the amount of alkali. Therefore, when the positive electrode active material of the present embodiment is applied to a lithium-ion secondary battery (hereinafter also referred to as "secondary battery"), it is possible to suppress generation of gas during a reaction in the battery.

Also, by setting the value x, corresponding to the amount of defects from the stoichiometric ratio of the lithium element, to be 0.02 or more and 0.08 or less, it is possible to enhance cycle characteristics when the positive electrode active material of the present embodiment is applied to a secondary battery.

The composition of the lithium-nickel complex oxide can be measured through quantitative analysis using inductively coupled plasma (ICP) optical emission spectrometry.

### (1-3) Percentage of Element Other Than Li occupying Li Site (3b Site)

In the crystal structure of the lithium-transition metal complex oxide contained in the positive electrode active material according to the present embodiment, the percentage of the element other than Li occupying the Li site (3b site) is preferably 2% or more and 8% or less, and more preferably 2% or more and 6% or less.

The percentage of the element other than Li occupying the Li site (3b site) refers to a percentage of a nickel element occupying the Li site (3b site). The percentage of the element other than Li occupying the Li site (3b site) is obtained by obtaining a powder X-ray diffraction pattern through powder X-ray diffraction and analyzing the powder X-ray diffraction pattern by a Rietveld method. A crystal structure when performing the analysis by the Rietveld method can be a layered rock-salt type structure, which is the crystal structure of the lithium-transition metal complex oxide.

When repeatedly charging and discharging a secondary battery, lithium is repeatedly intercalated and deintercalated between layers of the lithium-transition metal complex oxide. However, when a secondary battery using a conventional positive electrode active material is repeatedly charged and discharged, nickel sometimes moves and occupies some voids formed by the deintercalation of lithium. This prevents intercalation of lithium into the site occupied by nickel, potentially leading to degradation in cycle characteristics.

In the lithium-transition metal complex oxide contained in the positive electrode active material of the present embodiment, the percentage of the element other than Li occupying the Li site (3b site) is 2% or more. Since nickel is previously intercalated into the Li site in this way, it is considered that it is possible to suppress intercalation of nickel into the sites formed through deintercalation of lithium during charging. Therefore, it is considered that it is possible to suppress reduction in battery capacity when charging and discharging are repeatedly performed, thereby enhancing cycle characteristics.

Also, when the percentage of the element other than Li occupying the Li site (3b site) is 8% or less, it is possible to suppress reduction in capacity in an initial stage. Therefore, lithium contributing to charging and discharging is ensured in a sufficient amount, and reaction resistance can be suppressed to sufficiently enhance the battery capacity and output.

### (1-4) Average Particle Size of Primary Particles

In the positive electrode active material of the present embodiment, the average particle size of the primary particles is preferably 20 nm or more and 250 nm or less, and more preferably 20 nm or more and 150 nm or less.

Setting the average particle size of the primary particles of the positive electrode active material of the present embodiment to be 20 nm or more means that the size of the primary particles contained in the positive electrode active material of the present embodiment and the size of the crystallites forming the primary particles are sufficiently increased. Therefore, it is possible to increase the crystallinity of the lithium-transition metal complex oxide contained in the positive electrode active material. Also, when the positive electrode active material of the present embodiment is applied to a secondary battery, it is possible to enhance the battery capacity, resulting in a secondary battery having excellent battery capacity and cycle characteristics.

However, even if the average particle size of the primary particles of the positive electrode active material of the present embodiment is made excessively large, the effect of enhancing the battery capacity is saturated, and thus the average primary particle size of the lithium-nickel complex oxide is preferably 250 nm or less.

The average particle size of the primary particles of the positive electrode active material is obtained by selecting primary particles of the positive electrode active material observable in their entireties using a scanning electron microscope (SEM), measuring their major axis lengths, and averaging the measured major axis lengths. When calculating the average particle size of the primary particles, no particular limitation is imposed on the number of primary particles to be evaluated.

For example, when the positive electrode active material contains secondary particles, 10 or more and 20 or less secondary particles are selected, and primary particles are selected from the selected secondary particles. Preferably, a total of 20 or more and 30 or less primary particles are selected, and the major axis lengths of the selected primary particles are measured.

When the positive electrode active material contains independent primary particles not forming secondary particles, preferably five or more primary particles of the positive electrode active material are evaluated. No particular limitation is imposed on the upper limit of the number of primary particles to be used for this evaluation. For example, it is preferable to evaluate 20 or less primary particles.

When the positive electrode active material contains only secondary particles, the above-described number of secondary particles can be selected as the secondary particles, and the above-described number of primary particles can be selected in total from the secondary particles. Then, the major axis lengths of the selected primary particles can be measured, and the average value of the measured lengths can be used as the average particle size of the primary particles of the positive electrode active material.

When the positive electrode active material contains both secondary particles and independent primary particles, the above-described number of primary particles can be selected from the above-described number of selected secondary particles and the independent primary particles. Then, the major axis lengths of all the selected primary particles can be measured, and the average value of the measured lengths can be used as the average particle size of the primary particles of the positive electrode active material.

When the average particle size of the primary particles of the positive electrode active material is set to be in the above-described range, both the battery capacity and cycle characteristics can be especially enhanced when the positive electrode active material is applied to a secondary battery.

### [Production Method of Positive Electrode Active Material for Lithium-Ion Secondary Battery]

No particular limitation is imposed on the production method of the positive electrode active material for the lithium-ion secondary battery as long as the positive electrode active material having the above characteristics can be obtained. In the following, an example of the production method of the positive electrode active material according to the present embodiment will be described.

Since the above-described positive electrode active material can be produced by the production method of the positive electrode active material of the present embodiment as described above, description of the already described matters will be partially omitted.

The production method of the positive electrode active material of the present embodiment can be performed, for example, in accordance with the flow 10 illustrated in FIG. 1. That is, the production method of the positive electrode active material of the present embodiment can include a mixing step (S1) and a firing step (S2).

In the mixing step (S1), a nickel compound, which is one or more selected from nickel hydroxide and nickel oxide, and a lithium compound can be mixed to obtain a lithium mixture. Here, preferably, the nickel compound and the lithium compound are mixed such that a ratio by number of lithium atoms to nickel atoms in the lithium mixture is 0.92 or more and 0.98 or less.

In the firing step (S2), the lithium mixture can be fired to produce the positive electrode active material. In the firing step, preferably, the lithium mixture is heated at a heating rate of 2 °C/minute or less and fired at a temperature of 600°C or higher and 700°C or lower.

In the following, configuration examples of the steps will be described.

### (1) Mixing Step (S1)

In the mixing step (S1), as described above, the nickel compound, which is one or more selected from nickel hydroxide and nickel oxide, and the lithium compound can be mixed to obtain the lithium mixture.

The nickel compound and the lithium compound can be added and mixed, for example, as powders (solid phases). In the following, materials that are raw materials used in the mixing step will be described.

### (1-1) Regarding Raw Materials

### (Nickel Compound)

The nickel compound used in the mixing step (S1) can be obtained by a publicly known method.

The nickel compound may be nickel hydroxide or nickel oxide. Alternatively, the nickel compound may be a mixture of nickel hydroxide and nickel oxide. A production method of the nickel hydroxide is, for example, a method of performing neutralizing crystallization using an aqueous solution of a nickel salt and an alkaline solution. Also, a portion or the entirety of the nickel hydroxide may be formed into nickel oxide, for example, by thermally treating the nickel hydroxide to remove water from the nickel hydroxide.

### (Lithium Compound)

No particular limitation is imposed on the lithium compound, and any publicly known compound containing lithium may be used. For example, one or more selected from lithium carbonate, lithium hydroxide, and lithium nitrate can be used. The lithium compound may be a mixture of two or more compounds selected from the above compounds.

More preferably, the lithium compound is one or more selected from lithium carbonate and lithium hydroxide from the viewpoints that the influence of residual impurities is small and these dissolve at a firing temperature. Also, more preferably, the lithium compound is lithium hydroxide from the viewpoint of obtaining a lithium-transition metal complex oxide having especially high crystallinity.

### (1-2) Mixing Method

No particular limitation is imposed on the mixing method of the nickel compound and the lithium compound. It is preferable to sufficiently mix these particles to the extent that the particles are not destroyed.

The mixing of the nickel compound and the lithium compound can be performed using a typical mixer, such as a shaker mixer, a Loedige mixer, a Julia mixer, a V-blender, or the like. When the mixing is not sufficiently performed, the ratio by mole (Li/Ni) of lithium (Li) to nickel (Ni) varies between individual particles of the positive electrode active material, potentially raising problems, such as insufficient battery characteristics and the like. Therefore, preferably, the mixing is sufficiently performed.

### (1-3) Mixture Ratio

The lithium compound is preferably mixed such that the ratio by number (Li/Ni) of lithium atoms (Li) to nickel atoms (Ni) in the lithium mixture obtained in the mixing step is 0.92 or more and 0.98 or less. That is, it is preferable to perform the mixing such that Li/Ni in the lithium mixture is equal to Li/Ni in a fired product to be obtained. This is because the ratio by mole of the elements, i.e., lithium and nickel, remains unchanged from before to after the firing step (S2), and thus Li/Ni in the lithium mixture in the mixing step (S1) is retained in the fired product. The amounts (ratios) of the elements contained in the lithium mixture are substantially maintained in the lithium-transition metal complex oxide.

### (2) Firing Step (S2)

The firing step (S2) is a step of firing the lithium mixture obtained in the mixing step (S1) to obtain a fired product containing the lithium-transition metal complex oxide. When the lithium mixture is fired, lithium in the lithium compound diffuses into the nickel compound to form the lithium-transition metal complex oxide. The lithium compound melts at a temperature at the time of firing, and penetrates into the nickel compound to form a fired product of the lithium-transition metal complex oxide.

No particular limitation is imposed on firing conditions in the firing step (S2). The firing conditions can be selected such that a resulting lithium-transition metal complex oxide has an intended composition and characteristics, and the percentage of the element other than Li occupying the Li site (3b site) is in a desired range. In the following, suitable examples of the firing conditions will be described.

### (Atmosphere)

The firing atmosphere is preferably an oxidizing atmosphere. The oxidizing atmosphere preferably has an oxygen concentration of 60% by volume or more, more preferably an oxygen concentration of 80% by volume or more, and further preferably an oxygen concentration of 85% by volume or more. Since the oxidizing atmosphere can be an oxygen atmosphere, the oxygen concentration can be 100% by volume or less.

In the present specification, the firing atmosphere refers to a gas for supply to a firing furnace.

### (Firing Temperature)

The firing is preferably performed at a firing temperature of 600°C or higher and 700°C or lower, more preferably a firing temperature of 610°C or higher and 685°C or lower, and further preferably a firing temperature of 625°C or higher and 675°C or lower.

The firing of the lithium mixture can be performed by heating the lithium mixture from room temperature to the above firing temperature and then lowering the temperature to room temperature.

The heating rate up to the firing temperature is preferably 2 °C/minute or less, and more preferably 0.1 °C/minute or more and 2 °C/minute or less.

When the heating rate is 2 °C/minute or less, the reaction in the lithium mixture can proceed evenly, and crystal growth of the lithium-transition metal complex oxide can be promoted.

No particular limitation is imposed on the retention time at the firing temperature. The retention time at the firing temperature is preferably 5 hours or more, and more preferably 10 hours or more and 48 hours or less.

The percentage of the element other than Li occupying the Li site (3b site) of the lithium-transition metal complex oxide can be easily adjusted to fall within the above-described range by firing a predetermined lithium mixture in the above temperature pattern.

In accordance with, for example, the ratios of lithium and nickel contained in the intended composition of the lithium-transition metal complex oxide, the firing conditions, such as, for example, the firing temperature suitable for adjusting the percentage of the element other than Li occupying the Li site (3b site) to a desired range can change. Therefore, it is preferable, in accordance with the intended composition, to select the optimum firing temperature in the above temperature range, and select temperature conditions, such as the heating rate, the retention time, and the like.

The production method of the positive electrode active material of the present embodiment may include any steps in addition to the mixing step and the firing step.

### (3) Crushing Step

The fired product obtained in the firing step (S2) may be used as the positive electrode active material of the present embodiment. However, although sintering between the particles of the fired product obtained after the firing step (S2) is suppressed, coarse particles may be formed through weak sintering or aggregation. In such a case, the production method of the positive electrode active material of the present embodiment may include a crushing step of crushing the fired product. By crushing the fired product, the sintering and aggregation can be eliminated to adjust a particle size distribution.

### (4) Pulverizing Step

The production method of the positive electrode active material of the present embodiment may include a pulverizing step of pulverizing the fired product or the crushed powder after the firing step (S2) or the crushing step.

After the crushing step and the pulverizing step, sieving may be performed to select particles having a desired particle size.

### (5) Water Washing Step

The production method of the positive electrode active material of the present embodiment may include a water washing step of washing the fired product obtained in the firing step (S2) with water.

By performing the water washing step, excess lithium remaining on the particle surfaces of the positive electrode active material can be removed.

In the water washing step, the fired product can be mixed with water and washed in the form of a slurry (slurry formation step).

No particular limitation is imposed on water used for the slurry formation in the water washing step. For example, water having an electrical conductivity of lower than 10 µS/cm can be preferably used, and water having an electrical conductivity of 1 µS/cm or lower can be more preferably used.

It is preferable to stir the produced slurry during the washing with water.

In the water washing step, after the formation into the slurry, the slurry is subjected to solid-liquid separation, i.e., filtration and dehydration, and thus water-washed powder can be obtained (solid-liquid separation step). No particular limitation is imposed on a device used for filtration and dehydration, and, for example, a centrifugal-type or filter press-type solid-liquid separator can be used.

In the water washing step, it is preferable to dry the water-washed powder containing water obtained after the solid-liquid separation (drying step). No particular limitation is imposed on drying conditions. For example, the drying is preferably performed, for example, at a temperature of 100°C or higher and 350°C or lower in an oxidizing atmosphere or vacuum atmosphere.

By water-washing a fired product produced under the above-described conditions in which Li/Ni is 1.00 or more in the mixing step, it is possible to obtain a lithium-transition metal complex oxide having an Li/Me of 0.92 or more and 0.98 or less. However, in the above case, according to the studies conducted by the inventors of the present invention, it is not possible to obtain a positive electrode active material that satisfies the definition of the positive electrode active material of the present embodiment regarding, for example, the percentage of the element other than Li occupying the Li site (3b site). Thus, the effects of the positive electrode active material of the present embodiment cannot be obtained.

### [Lithium-Ion Secondary Battery]

The lithium-ion secondary battery of the present embodiment includes at least a positive electrode, a negative electrode, and a non-aqueous electrolyte. The positive electrode can contain the above-described positive electrode active material for the lithium-ion secondary battery.

Hereinafter, components of one configuration example of the secondary battery of the present embodiment will be described. The secondary battery of the present embodiment includes, for example, the positive electrode, the negative electrode, and the non-aqueous electrolyte, and is formed of components similar to those of a typical lithium-ion secondary battery. The embodiments described below are merely illustrative, and the lithium-ion secondary battery of the present embodiment can be embodied in various modified and improved forms based on knowledge of persons skilled in the art, including the following embodiments. Also, no particular limitation is imposed on applications of the secondary battery.

### (Positive Electrode)

The positive electrode of the secondary battery of the present embodiment may include the above-described positive electrode active material.

One example of a production method of the positive electrode will be described below. First, the above-described positive electrode active material (powder form), a conductive agent, and a binding agent (binder) are mixed to form a positive electrode mixture. If necessary, activated carbon or a solvent for viscosity adjustment or the like is added. The resulting mixture is kneaded to form a positive electrode mixture paste.

The mixing ratio of the materials in the positive electrode mixture is a factor that determines the performance of the lithium-ion secondary battery, and can be adjusted in accordance with intended applications. The mixing ratio of the materials may be similar to that of a positive electrode of a publicly known lithium-ion secondary battery. For example, when the total mass of the solid content of the positive electrode mixture excluding the solvent is 100% by mass, the positive electrode active material may be contained in an amount of 60% by mass or more and 95% by mass or less, the conductive agent may be contained in an amount of 1% by mass or more and 20% by mass or less, and the binding agent may be contained in an amount of 1% by mass or more and 20% by mass or less.

The obtained positive electrode mixture paste is applied to the surface of a current collector formed of, for example, aluminum foil, and is dried to diffuse the solvent, thereby producing a sheet-like positive electrode. If necessary, the positive electrode can be pressed by a roll press or the like in order to increase the electrode density. The sheet-like positive electrode obtained in this manner can be, for example, cut to an appropriate size in accordance with an intended battery, and can be used for the production of a battery.

As the conductive agent, for example, graphite (natural graphite, artificial graphite, expanded graphite, or the like), a carbon black material, such as acetylene black, Ketjen black (registered trademark), or the like can be used.

The binding agent (binder) plays a role in binding active material particles together. For example, it is possible to use one or more selected from polyvinylidene fluoride (PVDF), polytetrafluoroethylene (PTFE), fluororubber, ethylene propylene diene rubber, styrene butadiene, a cellulose-based resin, polyacrylic acid, and the like.

If necessary, a solvent that disperses the positive electrode active material, the conductive agent, and the like and dissolves the binding agent may be added to the positive electrode mixture. As the solvent, specifically, an organic solvent, such as N-methyl-2-pyrrolidone or the like, can be used. Also, activated carbon may be added to the positive electrode mixture in order to increase electric double layer capacitance.

The production method of the positive electrode is not limited to the above method described as an example, and may be any other method. For example, the positive electrode may be produced by press-molding the positive electrode mixture and then drying the resulting product in a vacuum atmosphere.

### (Negative Electrode)

The negative electrode for use may be a metal lithium, a lithium alloy, or the like. The negative electrode may be formed in the following manner. Specifically, a binding agent is mixed with a negative electrode active material enabling intercalation and deintercalation of lithium ions, followed by addition of an appropriate solvent, thereby forming a negative electrode mixture paste. The negative electrode mixture paste is applied to the surface of a metal foil current collector, such as copper or the like, followed by drying. If necessary, the resulting product is compressed in order to increase the electrode density.

As the negative electrode active material, for example, it is possible to use fired organic compounds, such as natural graphite, artificial graphite, a phenol resin, and the like, and powdered carbon materials, such as coke and the like. In this case, a fluorine-containing resin, such as PVDF or the like, can be used as the negative electrode binding agent, as in the positive electrode. As a solvent that disperses the active material and the binding agent, an organic solvent, such as N-methyl-2-pyrrolidone or the like, can be used.

### (Separator)

A separator may be interposed between the positive electrode and the negative electrode, if necessary. The separator is configured to separate the positive electrode and the negative electrode from each other, and retain the electrolyte. A publicly known separator can be used as the above separator. For example, it is possible to use a thin film formed of polyethylene, polypropylene, or the like and having many minute pores.

### (Non-Aqueous Electrolyte)

As the non-aqueous electrolyte, for example, a non-aqueous electrolytic solution can be used.

As the non-aqueous electrolytic solution, for example, it is possible to use a solution prepared by dissolving a lithium salt, serving as a supporting salt, in an organic solvent. Also, the non-aqueous electrolytic solution for use may be a solution prepared by dissolving a lithium salt in an ionic liquid. The ionic liquid refers to a salt that is formed of a cation other than a lithium ion and an anion and is in a liquid state even at normal temperature.

Examples of the organic solvent include, for example: cyclic carbonates, such as ethylene carbonate, propylene carbonate, butylene carbonate, trifluoropropylene carbonate, and the like; chain carbonates, such as diethyl carbonate, dimethyl carbonate, ethyl methyl carbonate, dipropyl carbonate, and the like; ether compounds, such as tetrahydrofuran, 2-methyltetrahydrofuran, dimethoxyethane, and the like; sulfur compounds, such as ethyl methyl sulfone, butane sultone, and the like; and phosphorus compounds, such as triethyl phosphate, trioctyl phosphate, and the like. These may be used alone or in combination as a mixture.

As the supporting salt, it is possible to use LiPF₆, LiBF₄, LiClO₄, LiAsF₆, LiN(CF₃SO₂)₂, composite salts thereof, and the like. Further, the non-aqueous electrolytic solution may contain a radical scavenger, a surfactant, a flame retardant, and the like.

Also, as the non-aqueous electrolyte, a solid electrolyte may be used. The solid electrolyte has a property to withstand a high voltage. Examples of the solid electrolyte include inorganic solid electrolytes and organic solid electrolytes.

Examples of the inorganic solid electrolyte include oxide-based solid electrolytes, sulfide-based solid electrolytes, and the like.

No particular limitation is imposed on the oxide-based solid electrolytes. For example, it is preferable to use the oxide-based solid electrolytes that contain oxygen (O) and having lithium-ion conductivity and electron insulation properties. For example, as the oxide-based solid electrolytes, it is possible to use one or more selected from lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}Al_{X}Ti_{2-X}(PO₄)₃ (0≤X≤1), Li_{1+X}Al_{X}Ge_{2-X}(PO₄)₃ (0≤X≤1), LiTi₂(PO₄)₃, Li_{3X}La_{2/3-X}TiO₃ (0≤X≤2/3), Li₅La₃Ta₂O₁₂, Li₇La₃Zr₂O₁₂, Li₆BaLa₂Ta₂O₁₂, Li_{3.6}Si_{0.6}P_{0.4}O₄, and the like.

No particular limitation is imposed on the sulfide-based solid electrolytes. For example, it is preferable to use the sulfide-based solid electrolytes that contain sulfur (S) and having lithium-ion conductivity and electron insulation properties. As the sulfide-based solid electrolytes, it is possible to use one or more selected from Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and the like.

The inorganic solid electrolyte for use may be an inorganic solid electrolyte other than the above-listed ones. Examples thereof include Li₃N, LiI, Li₃N-LiI-LiOH, and the like.

No particular limitation is imposed on the organic solid electrolytes as long as the organic solid electrolytes are a polymer compound exhibiting ionic conductivity. For example, it is possible to use polyethylene oxide, polypropylene oxide, copolymers thereof, and the like. Also, the organic solid electrolyte may contain a supporting salt (lithium salt).

### (Shape and Configuration of Secondary Battery)

The lithium-ion secondary battery of the present embodiment described above can have various shapes, such as a cylindrical shape, a stacked shape, or the like. Regardless of the shape thereof, as long as the secondary battery of the present embodiment uses the non-aqueous electrolytic solution as the non-aqueous electrolyte, a structure that is hermetically closed in a battery casing can be obtained when the positive electrode and the negative electrode are stacked via a separator to form an electrode body, the resulting electrode body can be impregnated with the non-aqueous electrolytic solution. Then, the positive electrode current collector and the positive electrode terminal leading to the exterior are connected to each other using a current collecting lead or the like, and the negative electrode current collector and the negative electrode terminal leading to the exterior are connected to each other using a current collecting lead or the like.

As described above, the secondary battery of the present embodiment is not limited to the form in which the non-aqueous electrolytic solution is used as the non-aqueous electrolyte. The secondary battery may be, for example, a secondary battery using a solid non-aqueous electrolyte, i.e., an all-solid-state battery. In the case of an all-solid-state battery, the configuration other than the positive electrode active material may be changed, if necessary.

The secondary battery of the present embodiment can be used for various applications. The secondary battery of the present embodiment can be a high-capacity, high-output secondary battery. Thus, the secondary battery of the present embodiment is suitable, for example, as a power supply of a small portable electronic device (e.g., a laptop personal computer, a mobile phone terminal, or the like) for which a high capacity is always required. Also, the secondary battery of the present embodiment is suitable as a power supply of an electric vehicle for which a high output is required.

The secondary battery of the present embodiment can be made compact and high-output. Thus, the secondary battery of the present embodiment is suitable as a power supply for an electric vehicle that has limitation in terms of a space available for the power supply. The secondary battery of the present embodiment can be used not only as a power supply for an electric vehicle driven purely by electric energy, but also as a power supply for what is referred to as a hybrid vehicle that also uses a combustion engine, such as a gasoline engine, a diesel engine, or the like.

### EXAMPLES

The present invention will be described below in more detail by way of examples. However, the present invention is not limited in any way by these examples.

First, evaluation methods of the positive electrode active materials and the secondary batteries obtained in the following Examples and Comparative Examples will be described.

### (Evaluation of Positive Electrode Active Material)

The obtained positive electrode active materials were evaluated in the following manner.

### (a) Evaluation of composition

The positive electrode active materials were analyzed for compositions through ICP emission spectrometry. The evaluation results are shown in the column "Composition" in Table 1.

### (b) Percentage of element other than Li occupying Li site (3b site)

The positive electrode active materials prepared in the following Examples and Comparative Examples were measured for X-ray diffraction patterns using an X-ray diffraction (XRD) device, X'PertPRO (obtained from Spectris Co., Ltd.). The X-ray diffraction patterns were measured using CuKα radiation.

It was confirmed based on the obtained X-ray diffraction patterns that the lithium-transition metal complex oxides contained in the positive electrode active materials obtained in the following Examples 1 to 7 and Comparative Examples 1 to 3 had a layered rock-salt structure.

Then, Rietveld analysis was performed on the obtained X-ray diffraction patterns using crystal structure analysis software, RIETAN. Here, the space group was set to R-3m, lithium and mixed nickel (nickel in the lithium site) were set in the 3b site as chemical species, and nickel was set in the 3a site as a chemical species. After refining scale factors, lattice constants, and global parameters, site occupancies and atomic coordinates were refined. The obtained site occupancies of nickel in the lithium site (3b site) were determined, and the results are shown in the column "Percentage of element other than Li occupying Li site (3b site)" in Table 1.

### (c) Average particle size of primary particles

In an SEM observation image of lithium-nickel complex oxide particles, 15 secondary particles observable in their entireties through image analysis were selected, and primary particles were selected from the selected secondary particles. Here, the primary particles were selected such that the total number of the primary particles was 30. The major axis lengths of the selected primary particles were measured, and the average value of the measured major axis lengths was defined as the average particle size of the primary particles.

The evaluation results are shown in the column "Average particle size of primary particles" in Table 1.

### (Production and evaluation of lithium-ion secondary batteries)

### (a) Production of coin-type batteries

Coin-type batteries were produced using the positive electrode active materials prepared in the following Examples and Comparative Examples.

Specifically, 0.170 g of the positive electrode active material obtained in the following Examples and Comparative Examples was weighed in a glove box in an argon atmosphere. Then, the weighed positive electrode active material, 0.010 g of acetylene black, 0.250 g of a polyvinylidene fluoride (PVDF) solution (8% solution, obtained from KUREHA CORPORATION), and 70 µL of N-methyl-2-pyrrolidone (NMP) were charged into a container, followed by mixing with a stirrer (AR-100, obtained from THINKY CORPORATION).

A slurry obtained through stirring was coated on an aluminum foil, followed by drying in vacuum at normal temperature for 2 hours and then drying in vacuum at 120°C for 2 hours, thereby obtaining an electrode.

The obtained electrode was punched to a diameter of 10 mm, followed by measuring the weight of the electrode. This was used as a positive electrode.

A metal lithium was used as a negative electrode, and a polyethylene (PE) porous film was used as a separator. The positive electrode, separator, and negative electrode were stacked in this order. The stack of the positive electrode, separator, and negative electrode was impregnated with an electrolytic solution, and sealed between a positive electrode can and a negative electrode can. A gasket was disposed between the positive electrode can and the negative electrode can. Thus, these members were restricted from relative movement and fixed to maintain a non-contact state, i.e., an electrically insulated state.

As the electrolytic solution, a 3:7 mixture (volume ratio) of ethylene carbonate (EC) and diethyl carbonate (DEC) with 1M LiPF₆ as the supporting electrolyte was used.

Production of coin-type batteries was performed in a dry room controlled to a dew point of -60°C.

### (b) Evaluation of discharge capacity and cycle characteristics

A capacity maintenance rate, indicating cycle characteristics, was evaluated by measuring the coin-type battery for the capacity maintenance rate after 100 cycles of charging and discharging.

Specifically, a current of 10 mA/g was applied to the coin-type battery, thereby charging the coin-type battery to a cutoff voltage of 4.5 V. Subsequently, a cycle including discharging to a cutoff voltage of 2.5 V was repeated up to 100 cycles. Then, the capacity maintenance rate, i.e., the ratio of the discharge capacity at the 100^{th} cycle after conditioning to the discharge capacity at the 1^{st} cycle, was calculated and evaluated.

The discharge capacity at the 1^{st} cycle is shown in the column "Initial capacity" in Table 1, and the capacity maintenance rate is shown in the column "Capacity maintenance rate" in Table 1.

### (Production Conditions of Positive Electrode Active Materials)

### [Example 1]

Nickel hydroxide and lithium hydroxide monohydrate, obtained by publicly known methods, were mixed to prepare a lithium mixture (mixing step).

In the mixing step, the nickel hydroxide and the lithium hydroxide monohydrate were sufficiently mixed using a shaker mixer (model: TURBULA Type T2C, obtained from Willy A. Bachofen (WAB) AG) to prepare a raw material mixture.

In the mixing step, the raw materials were weighed and mixed such that the ratio by number (Li/Ni) of lithium atoms (Li) to nickel atoms (Ni) in a lithium mixture to be obtained would be 0.96. Nickel hydroxide was obtained by a crystallization method.

During a firing step, oxygen was supplied into a furnace, and this lithium mixture was fired in an oxygen atmosphere (firing step).

The firing was performed by heating the lithium mixture at a heating rate of 2 °C/minute to a firing temperature of 650°C, and retaining the lithium mixture at the firing temperature of 650°C for 12 hours. After the retention at the firing temperature, the lithium mixture was cooled to room temperature.

The lithium-transition metal complex oxide after the firing was crushed (crushing step) to obtain a positive electrode active material formed of lithium-transition metal complex oxide particles.

The obtained positive electrode active material was observed with an SEM, and it was confirmed that the positive electrode active material was formed by secondary particles in which a plurality of primary particles were aggregated with each other. In the other Examples described below, it was confirmed that the positive electrode active material was formed by secondary particles in which primary particles were aggregated with each other.

Other evaluation results are shown in Table 1.

Using the obtained positive electrode active material, the above-described coin-type battery was produced and evaluated. The evaluation results are shown in Table 1.

### [Example 2]

The mixing ratio of the lithium hydroxide monohydrate to the nickel hydroxide in the mixing step was changed such that the ratio by number (Li/Ni) of the lithium atoms (Li) to the nickel atoms (Ni) in a lithium mixture to be obtained would be 0.98. Under the same conditions as in Example 1 except for this, a positive electrode active material and a coin-type battery were produced and evaluated. The evaluation results are shown in Table 1.

### [Comparative Example 1]

The mixing ratio of the lithium hydroxide monohydrate to the nickel hydroxide in the mixing step was changed such that the ratio by number (Li/Ni) of the lithium atoms (Li) to the nickel atoms (Ni) in a lithium mixture to be obtained would be 1.00. Under the same conditions as in Example 1 except for this, a positive electrode active material and a coin-type battery were produced and evaluated. The evaluation results are shown in Table 1.

### [Comparative Example 2]

The mixing ratio of the lithium hydroxide monohydrate to the nickel hydroxide in the mixing step was changed such that the ratio by number (Li/Ni) of the lithium atoms (Li) to the nickel atoms (Ni) in a lithium mixture to be obtained would be 0.90. Under the same conditions as in Example 1 except for this, a positive electrode active material and a coin-type battery were produced and evaluated. The evaluation results are shown in Table 1.

### [Examples 3 and 4]

Positive electrode active materials and coin-type batteries were produced and evaluated under the same conditions as in Example 1, except that the gas supplied into the furnace during the firing step was a gas mixture of oxygen and air.

In Example 3, a gas mixture of oxygen of 50% by volume and air of 50% by volume was used. Therefore, the oxygen concentration of the firing atmosphere was about 61% by volume.

In Example 4, a gas mixture of oxygen of 70% by volume and air of 30% by volume was used. Therefore, the oxygen concentration of the firing atmosphere was about 76% by volume.

The evaluation results are shown in Table 1.

### [Comparative Example 3]

A positive electrode active material and a coin-type battery were produced and evaluated under the same conditions as in Example 1, except that the atmosphere in the firing step was air and the firing temperature was 710°C.

Therefore, the oxygen concentration of the firing atmosphere was about 21% by volume.

The evaluation results are shown in Table 1.

### [Examples 5 to 7]

Positive electrode active materials and coin-type batteries were produced and evaluated under the same conditions as in Example 1, except that the firing temperature in the firing step was changed.

The firing temperature was 630°C in Example 5, 680°C in Example 6, and 700°C in Example 7.

The evaluation results are shown in Table 1.

**[Table 1]**

| | Productions conditions | | | | Evaluation results | | | | |
|---|---|---|---|---|---|---|---|---|---|
| | Mixing step | Firing step | | | Composition | Average particle size of primary particles | Percentage of element other than Li occupying Li site (3b site) | Initial capacity | Capacity maintenance rate |
| | Li/Ni | Heating rate (°C/min) | Firing temperature (°C) | Atmosphere | | | | | |
| | | | | | | (nm) | (%) | (mAh/g) | (%) |
| Example 1 | 0.96 | 2 | 650 | O₂ | Li_{0.96}NiO₂ | 125 | 2.2 | 199.8 | 89.1 |
| Example 2 | 0.98 | 2 | 650 | O₂ | Li_{0.98}NiO₂ | 152 | 2.0 | 207.5 | 82.1 |
| Example 3 | 0.96 | 2 | 650 | O₂(50%)+ Air(50%) | Li_{0.96}NiO₂ | 166 | 7.5 | 182.7 | 80.5 |
| Example 4 | 0.96 | 2 | 650 | O₂(70%)+ Air(30%) | Li_{0.96}NiO₂ | 151 | 5.0 | 186.8 | 85.9 |
| Example 5 | 0.96 | 2 | 630 | O₂ | Li_{0.96}NiO₂ | 85 | 2.6 | 193.7 | 88.5 |
| Example 6 | 0.96 | 2 | 680 | O₂ | Li_{0.96}NiO₂ | 218 | 2.4 | 191.9 | 86.8 |
| Example 7 | 0.96 | 2 | 700 | O₂ | Li_{0.96}NiO₂ | 342 | 2.9 | 176.6 | 85.9 |
| Comparative Example 1 | 1.00 | 2 | 650 | O₂ | LiNiO₂ | 260 | 1.5 | 213.8 | 76.2 |
| Comparative Example 2 | 0.90 | 2 | 650 | O₂ | Li_{0.90}NiO₂ | 135 | 4.5 | 163.1 | 73.4 |
| Comparative Example 3 | 0.96 | 2 | 710 | Air | Li_{0.96}NiO₂ | 183 | 9.0 | 146.4 | 70.8 |

### (Evaluation Results)

According to Table 1, it was confirmed that Examples 1 to 7, in which the percentage of the element other than Li occupying the Li site (3b site) was 2% or more and 8% or less and the contained lithium-transition metal complex oxide was the positive electrode active material represented by the above general formula (1), have capacity maintenance rates higher than those in Comparative Examples 1 to 3. That is, it was confirmed that the positive electrode active materials of Examples 1 to 7 when used in a lithium-ion secondary battery can enhance cycle characteristics compared to the positive electrode active materials of Comparative Examples 1 to 3.

This application claims priority to Japanese Patent Application No. 2023-123253, filed with the Japan Patent Office on July 28, 2023, and the entire contents of Japanese Patent Application No. 2023-123253 are incorporated in this international application by reference.

### REFERENCE SIGNS LIST

- 10: Flow
- S1: Mixing step
- S2: Firing step

## Claims

1. A positive electrode active material for a lithium-ion secondary battery containing secondary particles in which a plurality of primary particles are aggregated with each other, the positive electrode active material comprising:
a lithium-transition metal complex oxide having a layered rock-salt type structure, wherein
in a crystal structure of the lithium-transition metal complex oxide, a percentage of an element other than Li occupying an Li site (3b site) is 2% or more and 8% or less, and
a composition of the lithium-transition metal complex oxide is represented by general formula (1) below:
general formula (1): Li₁₋ₓNiO_{2+α}
(where 0.02≤x≤0.08 and -0.1≤α≤0.1).

2. The positive electrode active material for the lithium-ion secondary battery according to claim 1, wherein
an average particle size of the primary particles is 20 nm or more and 250 nm or less.

3. A production method of a positive electrode active material for a lithium-ion secondary battery, the production method comprising:
a mixing step of mixing a nickel compound, which is one or more selected from nickel hydroxide and nickel oxide, and a lithium compound such that a ratio by number of lithium atoms to nickel atoms in a lithium mixture to be obtained is 0.92 or more and 0.98 or less; and
a firing step of heating the lithium mixture at a heating rate of 2 °C/minute or less and firing the lithium mixture at a temperature of 600°C or higher and 700°C or lower.

4. A lithium-ion secondary battery, comprising:
a positive electrode;
a negative electrode; and
a non-aqueous electrolyte, wherein
the positive electrode contains the positive electrode active material for the lithium-ion secondary battery of claim 1 or 2.
